(19) Europäisches Patentamt

European Patent Office

Office européen des brevets

(11) Veröffentlichungsnummer: **0 278 551 B1**

(12) **EUROPÄISCHE PATENTSCHRIFT**

(45) Veröffentlichungstag der Patentschrift: **11.11.92**

(21) Anmeldenummer: **88200096.1**

(22) Anmeldetag: **20.01.88**

(51) Int. Cl.⁵: $H04N\ 5/94$, //H04N5/76

(54) **Schaltungsanordnung zur Detektion der Überschreitung eines vorgegebenen Frequenzhubbereiches.**

(30) Priorität: **31.01.87 DE 3702856**

(43) Veröffentlichungstag der Anmeldung:
**17.08.88 Patentblatt 88/33**

(45) Bekanntmachung des Hinweises auf die Patenterteilung:
**11.11.92 Patentblatt 92/46**

(84) Benannte Vertragsstaaten:
**BE DE FR GB**

(56) Entgegenhaltungen:
**FR-A- 2 204 082**
**US-A- 4 203 134**

**U. TIETZE et al.:**
**"Halbleiter-Schaltungstechnik", Auflage 5, 1980, Seiten 450-453, Springer Verlag, Berlin, DE**

**Anaren Components Full-line catalog pages 139, 154, 155/1984**

**HP RF & Microwave measurement symposium and exhibition, May 1981, page 14**

(73) Patentinhaber: **Philips Patentverwaltung**

**GmbH**
**Wendenstrasse 35 Postfach 10 51 49**
**W-2000 Hamburg 1(DE)**

(84) Benannte Vertragsstaaten:
**DE**

(73) Patentinhaber: **N.V. Philips' Gloeilampenfa-brieken**
**Groenewoudseweg 1**
**NL-5621 BA Eindhoven(NL)**

(84) Benannte Vertragsstaaten:
**BE FR GB**

(72) Erfinder: **Gehrt, Holger**
**Rothestrasse 33**
**W-2000 Hamburg 50(DE)**
Erfinder: **Hildebrandt, Günter**
**Lianenweg 11a**
**W-2000 Hamburg 54(DE)**
Erfinder: **Rehfeldt, Karl-Heinz**
**Dubenhorst 24**
**W-2087 Ellerbek(DE)**

(74) Vertreter: **Peters, Carl Heinrich, Dipl.-Ing. et al**
**Philips Patentverwaltung GmbH Wenden-strasse 35 Postfach 10 51 49**
**W-2000 Hamburg 1(DE)**

EP 0 278 551 B1

## Beschreibung

Die Erfindung bezieht sich auf eine Schaltungsanordnung zur Detektion von durch eine Überschreitung eines vorgegebenen, zulässigen Frequenzhubbereiches durch die Frequenz eines ersten Signals verursachten Fehlern mit einem Detektor, der ein Fehleranzeigesignal nur liefert, wenn die Phasenverschiebung zwischen dem ersten Signal und einem ihm in seiner Frequenz folgenden zweiten Signal dem Frequenzhubbereich entsprechende Grenzwerte überschreitet.

Aus der DE-C-29 39 402 ist eine Schaltungsanordnung zur Demodulation frequenzmodulierter Signale, die von einer Aufzeichnungsplatte abgespielt sind, und zur Fehlerermittlung aufgrund der Momentanfrequenz der Signale, die sich normalerweise innerhalb eines vorgegebenen Frequenzhubbereiches ändert und beim Auftreten von Fehlern diesen Frequenzhubbereich verläßt, bekannt. Diese Schaltungsanordnung enthält einen mit einem Frequenzdemodulator gekoppelten Fehlerdetektor zur Lieferung eines Fehleranzeigesignals. Der Frequenzdemodulator ist dabei als phasenverriegelte Regelschleife mit einem Phasendetektor und einem spannungssteuerbaren Oszillator ausgebildet. Dem Fehlerdetektor werden die auch dem Phasendetektor zugeführten frequenzmodulierten Signale und Oszillatorsignale zugeleitet, und sofern der Phasenunterschied zwischen diesen Signalen außerhalb eines vorgegebenen Phasenunterschiedsbereiches liegt, liefert er das Fehleranzeigesignal.

Die bekannte Schaltungsanordnung erfordert einen verhältnismäßig hohen Schaltungsaufwand, da einerseits als Demodulator eine phasenverriegelte Regelschleife verwendet wird und andererseits ein zusätzlicher Fehlerdetektor vorgesehen ist, der den phasenunterschied zwischen den frequenzmodulierten Signalen und den Oszillatorsignalen zusätzlich zum Phasendetektor der Regelschleife und parallel zu diesem liegend auswertet.

Außer bei abgewandelten Demodulatorbauarten besteht auch für andere Signalverarbeitungsanordnungen der Wunsch nach einer einfach aufgebauten und universell einsetzbaren Schaltungsanordnung zur Detektion der Überschreitung eines vorgegebenen Frequenzhubbereiches.

Der Erfindung liegt die Aufgabe zugrunde, eine derartige Schaltungsanordnung zu schaffen, die einerseits universell, d. h. unabhängig von weiteren Signalbearbeitungsstufen der unterschiedlichsten Art, einsetzbar ist und sich trotzdem bei Bedarf einfach mit diesen kombinieren läßt.

Diese Aufgabe wird bei einer gattungsgemäßen Schaltungsanordnung nach der Erfindung durch eine Verzögerungsanordnung gelöst, die gemäß den kennzeichnenden Merkmalen des Hauptanspruchs ausgebildet ist.

Der Erfindung liegt die Erkenntnis zugrunde, daß ein Fehlerdetektor der in der DE-C-29 39 402 beschriebenen Art nicht nur, wie dort beschrieben, zur Detektion eines phasenunterschiedes zweier verschiedener Signale geeignet ist, sondern darüber hinaus eine zuverlässige Aussage über die Einhaltung eines Frequenzhubbereiches durch ein Signal liefert, wenn dieses ihm zum einen unverzögert und zum anderen um eine vorgegebene Verzögerungszeit verschoben zugeleitet wird. Die Grenze des Frequenzhubbereiches kann dabei durch die verzögerungszeit bestimmt werden; insbesondere tritt ein Fehleranzeigesignal dann auf, wenn die Periodendauer des ersten Signales kleiner wird als das Doppelte der Verzögerungszeit.

Die erfindungsgemäße Schaltungsanordnung benötigt daher außer dem Detektor lediglich eine Verzögerungsanordnung, ist also sehr einfach aufgebaut. Durch Wahl der Verzögerungszeit kann sie leicht dem jeweils zu überwachenden Frequenzhubbereich angepaßt werden.

An dieser Stelle sei bemerkt, daß aus den Druckschriften Anaren Komponents, Full-Line Catalog 1983, Seiten 139, 154, 155 und Generation of low Phase Noise Microwave Signals, Dieter Scherer, May 1981, Seite 14 Frequenzdiskriminatoren bekannt sind, bei denen eine zugeführte Schwingung einerseits über eine Verzögerungsanordnung und andererseits unmittelbar je einem Eingang eines Mischers zugeleitet wird. Am Ausgang des Mischers wird eine Spannung erhalten, die proportional zu einer Kreisfunktion eines Phasenwinkels ist, der wiederum linear von der Frequenz und der Verzögerungszeit der Verzögerungsanordnung abhängt. In der letztgenannten Druckschrift ist eine Schaltungsanordnung mit einem Schleifenverstärker und einem Oszillator dargestellt, die mit dem vorbeschriebenen Frequenzdiskriminator eine Rückkopplungsschleife zum Regeln der Frequenz des Oszillators bilden.

In vorteilhafter Weise ist bei der Erfindung die Verzögerungszeit von der Frequenz des ersten Signals abhängig. Besonders vorteilhaft ist es, die Verzögerungszeit an der unteren Grenze des Frequenzhubbereiches verschwinden und innerhalb des Frequenzhubbereiches mit der Frequenz des ersten Signals ansteigen zu lassen. Bei ansonsten unverändertem Detektor kann dann der überwachte Frequenzhubbereich beliebig eingestellt werden.

Die erfindungsgemäße Schaltungsanordnung läßt sich vorteilhaft mit einem einfach aufgebauten Frequenzdemodulator in der Weise verbinden, daß die Verzögerungsanordnung gleichzeitig Teil des Frequenzdemodulators ist und daß in diesem das erste und das zweite Signal durch ein Exklusiv-Oder-Glied ggf. auch durch einen Multiplizierer, verknüpft werden. Durch die doppelte Ausnutzung der Verzögerungsanordnung ist ein sehr kompakter Aufbau möglich, was insbesondere eine Integration der Schaltungsanordnung auf einem Halbleiterplättchen begünstigt.

Die erfindungsgemäße Schaltungsanordnung wird vorteilhaft in einem Abspielgerät für Aufzeichnungsplatten verwendet, die beispielsweise als optische Bildplattenspeicher ausgebildet sind, in denen ein Laserstrahl unterschiedlich reflektierende Vertiefungen in einer lichtreflektierenden Schicht der Platte abtastet und dadurch ein entsprechend den Längen der Vertiefungen frequenzmoduliertes Signal gewonnen wird. Fehler in der lichtreflektierenden Schicht, der Drehgeschwindigkeit der Platte oder auch Verschmutzungen, die sich bevorzugt als Frequenzveränderungen des von der Platte ausgelesenen Signales bemerkbar machen, können damit detektiert werden.

Einige Ausführungsbeispiele der Erfindung sind in der Zeichnung dargestellt und werden im nachfolgenden näher beschrieben. Es zeigen

Fig. 1     das Blockschaltbild eines Beispiels für eine erfindungsgemäße Schaltungsanordnung, die weiterhin mit einem Frequenzdemodulator verbunden ist,

Fig. 2     das detaillierte Schaltbild einer bevorzugten Ausführungsform einer Verzögerungsanordnung für eine Schaltungsanordnung gemäß Fig. 1,

Fig. 3     ein weiteres Ausführungsbeispiel der Erfindung, ebenfalls verbunden mit einem Frequenzdemodulator, und

Fig. 4     ein Beispiel für eine Verzögerungsanordnung zur Verwendung in der Schaltungsanordnung nach Fig. 3.

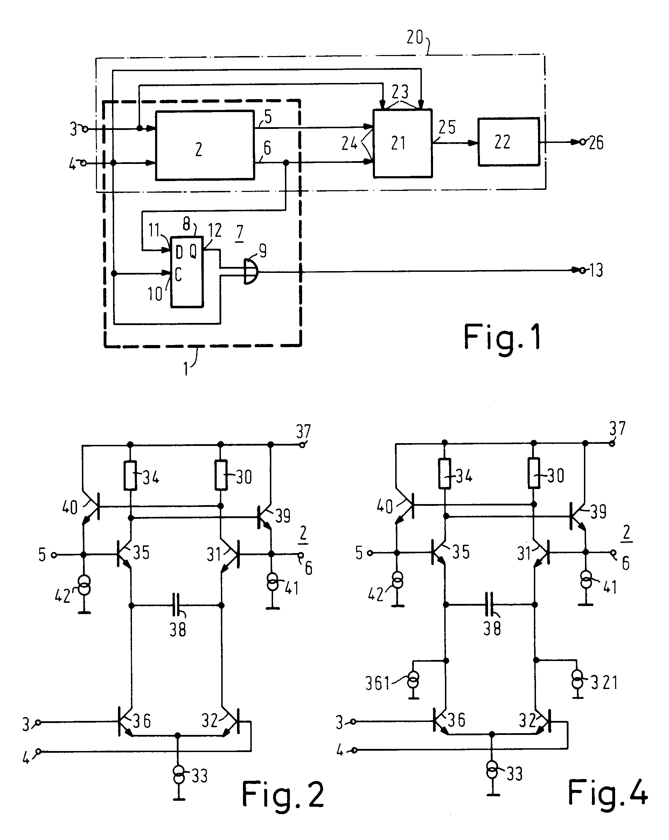

In Fig. 1 ist mit 1 eine Detektionsanordnung bezeichnet, die alle durch eine gestrichelte Linie umrandeten Bauteile umfaßt. Dabei handelt es sich um eine Verzögerungsanordnung 2 mit einem ersten und einem zweiten Eingang 3, 4 und einem ersten und zweiten Ausgang 5, 6. Über den ersten Eingang 3 wird der Verzögerungsanordnung 2 ein frequenzmoduliertes, amplitudenbegrenztes erstes Signal zugeleitet, das auch am zweiten Eingang 4 anliegt, allerdings in invertierter Form. Die Verzögerungsanordnung 2 bildet daraus ein um eine vorgegebene Verzögerungszeit verzögertes zweites Signal und gibt dieses am ersten Ausgang 5 sowie in invertierter Form am zweiten Ausgang 6 ab.

Die Detektionsanordnung 1 umfaßt weiterhin einen Detektor 7 mit einer Abtast- und -Halte-Schaltung 8 und einem Oder-Gatter 9. Der Abtast- und -Halte-Schaltung 8 wird an einem Dateneingang 11 vom zweiten Ausgang 6 der Verzögerungsanordnung 2 das invertierte zweite Signal und an einem Steuereingang 10 das invertierte erste Signal zugeführt. Solange am Steuereingang 10 ein Signal mit hohem Spannungspegel anliegt, wird der Spannungspegel des am Dateneingang 11 anliegenden Signals von der Abtast- und -Halte-Schaltung 8 unverändert ihrem Ausgang 12 zugeleitet. Wechselt dagegen das dem Steuereingang 10 zugeleitete Signal auf einen niedrigen Spannungspegel, behält das Signal am Ausgang 12 den unmittelbar vor diesem Wechsel innegehabten Spannungspegel bei, bis am Steuereingang 10 wieder ein Signal mit einem hohen Spannungspegel zugeführt wird.

Vom Ausgang 12 der Abtast- und -Halte-Schaltung 8 und von ihrem Steuereingang 10 werden die Signale den Eingängen des Oder-Gatters 9 zugeleitet, dessen Ausgang 13 ein Fehleranzeigesignal liefert.

Dieses kann gegebenenfalls in einer nicht dargestellten Impulsverlängerungsschaltung derart umgeformt werden, daß aus einzelnen Impulsen des Fehleranzeigesignals ein während der Überschreitung des Frequenzhubbereiches konstantes Signal erzeugt wird. Eine Beeinflussung des Verlaufes des Fehleranzeigesignals läßt sich auch beispielsweise dadurch erreichen, daß die Abtast- und -Halte-Schaltung 8 derart ausgebildet wird, daß der an ihrem Dateneingang 11 anliegende Spannungspegel nur während eines Wechsels von einem niedrigen Spannungspegel zu einem hohen Spannungspegel im Signal am Steuereingang 10 (invertiertes erstes Signal) an den Ausgang 12 durchgeschaltet und an diesem bis zum folgenden gleichartigen Wechsel im Spannungspegel am Steuereingang 10 festgehalten wird. Vorzugsweise entfällt dann das Oder-Gatter 9, der Ausgang 12 der Abtast-und -Halte-Schaltung 8 liefert unmittelbar das Fehleranzeigesignal.

Gemäß einer anderen Abwandlung kann der Detektor 7 auch mit dem ersten Eingang 3 und dem ersten Ausgang 5 der Verzögerungsanordnung 2 verbunden sein, so daß ihm das erste und das zweite Signal in nichtinvertierter Form zugeführt werden.

Während die vorstehend beschriebenen Ausführungsformen des Detektors 7 eine Überschreitung des vorgegebenen Frequenzhubbereiches in den negativen oder in den positiven Halbwellen des ersten Signales detektieren, kann durch ihre Kombination ein noch zuverlässigerer und schnellerer Detektor erhalten werden. Die Anordnung nach Fig. 1 wird dann durch eine weitere Abtast- und Halte-Schaltung für die Detektion von Fehlern der negativen Halbwelle des ersten Signales erweitert, die in ihrem Aufbau dem der Abtast- und Halte-Schaltung 8 entspricht. Sie ist mit ihrem Dateneingang mit dem ersten Ausgang 5 und mit ihrem Steuereingang mit dem ersten Eingang 3 der Verzögerungsanordnung 2 verbunden. Ihr Ausgang und der erste Eingang 3 der Verzögerungsanordnung 2 werden über ein Oder-Gatter verknüpft, dessen Ausgangssignal mit dem des Oder-Gatters 9 des Detektors 7 durch ein Und-Gatter zusammengefaßt werden, dessen Ausgangssignale dann dem Ausgang 13 zugeleitet werden.

Das Fehleranzeigesignal am Ausgang 13 des Oder-Gatters 9 zeigt im vorliegenden Beispiel ein Überschreiten der oberen Grenze des Frequenzhubbereiches an, die erreicht ist, wenn die Periodendauer des ersten Signales kleiner wird als das Doppelte der Verzögerungszeit der Verzögerungsanordnung 2. Dann tritt im ersten Signal bereits eine nachfolgende Flanke auf, bevor die zur voraufgehenden Flanke im ersten Signal zugeordnete Flanke im zweiten Signal erscheint. Dadurch gerät die Abtast- und -Halte-Schaltung 8 aus ihrem innerhalb des Frequenzhubbereiches eingehaltenen Umschaltrhythmus, was entweder unmittelbar oder durch Auswertung über das Oder-Gatter 9 zum Fehleranzeigesignal führt.

Die Schaltungsanordnung nach Fig. 1 umfaßt weiterhin einen Frequenzdemodulator 20, dessen Bauteile durch die strichpunktierte Linie umgrenzt sind und der außer der Verzögerungsanordnung 2 ein Exklusiv-Oder-Glied 21 sowie ein Tiefpaßfilter 22 umfaßt. Anstelle des Exklusiv-Oder-Gliedes 21 kann auch ein Multiplizierer vorgesehen sein. Dem Exlusiv-Oder-Glied 21 wird an einem ersten Eingangspaar 23 das erste Signal in invertierter bzw. nichtinvertierter Form und an einem zweiten Eingangspaar 24 entsprechend das zweite Signal zugeführt. Am Ausgang 25 des Exklusiv-Oder-Gliedes 21 tritt ein demoduliertes Signal auf, mit einem hohen Spannungspegel in den Zeitintervallen, in denen die Spannungspegel des ersten und des zweiten Signals voneinander abweichen, und einem niedrigen Spannungspegel, wenn sie übereinstimmen. Im nachgeschalteten Tiefpaßfilter (22) werden die in dem Signal vom Ausgang 25 enthaltenen höherfrequenten Signalanteile unterdrückt, so daß am Ausgang 26 des Tiefpaßfilters 22 ein oberwellenfreies demoduliertes Signal abgegeben wird.

Fig. 2 zeigt eine bevorzugte Ausführung für eine Verzögerungsanordnung 2 zum Einsatz in einer Schaltungsanordnung gemäß Fig. 1. Sie wird durch eine Multivibratorschaltung mit einem ersten Stromzweig, bestehend aus der Reihenschaltung eines ersten Widerstandes 30, des Hauptstrompfades eines ersten Transistors 31 sowie einer ersten steuerbaren Stromquelle 32, 33, und mit einem zweiten Stromzweig, bestehend aus der Reihenschaltung eines zweiten Widerstandes 34, des Hauptstrompfades eines zweiten Transistors 35 sowie einer zweiten steuerbaren Stromquelle 36, 33 gebildet. Dabei umfaßt die erste steuerbare Stromquelle einen ersten Steuertransistor 32 und die zweite steuerbare Stromquelle einen zweiten Steuertransistor 36, deren Steueranschlüsse den ersten bzw. zweiten Eingang der Verzögerungsanordnung 2 bilden. In Fig. 2 sind die Steuertransistoren 32, 36 als bipolare Transistoren ausgebildet, deren Emitteranschlüsse miteinander und mit einem Anschluß einer gemeinsamen Stromquelle 33 verbunden sind, die mit ihrem zweiten Anschluß mit Masse verbunden ist. Andererseits sind die Stromzweige über den ersten bzw. zweiten Widerstand 30 bzw. 34 mit einem Versorgungsspannungsanschluß 37 verbunden. Außerdem sind die Verbindungspunkte der Hauptstrompfade des ersten und des zweiten Transistors 31 bzw. 35 mit den Steuertransitoren 32 bzw. 36 durch eine Kapazität 38 miteinander verbunden, und es besteht eine Verbindung zwischen jedem der Steueranschlüsse des ersten und zweiten Transistors 31, 35, die daneben auch die Ausgänge 5, 6 der Verzögerungsanordnung 2 bilden, mit dem Verbindungspunkt zwischen dem Hauptstrompfad und dem Widerstand im jeweils anderen Stromzweig. Die letzteren Verbindungen sind zur Signalverstärkung über Emitterfolgerstufen, bestehend je aus einem Transistor 39 bzw. 40 und einer mit dessen Emitteranschluß gekoppelten Stromquelle 41 bzw. 42, ausgeführt.

Die Verzögerungsanordnung 2 stellt eine Multivibratorschaltung dar, die durch die Steuertransistoren 32, 36 in ihrem Schwingverhalten beeinflußt werden kann. Werden beispielsweise mit den Steuertransistoren 32, 36 konstante Ströme eingestellt, werden also an den ersten und zweiten Eingang 3, 4 Gleichspannungen angelegt, erhält man am ersten und zweiten Ausgang 5, 6 gegensinnig gepolte Rechteckschwingungen, deren Tastverhältnis von den eingestellten Strömen im ersten und zweiten Stromzweig und dessen Frequenz zusätzlich von der Größe der Kapazität 38 abhängt. Eine derartige Betriebsweise einer solchen Schaltung ist im Prinzip bekannt aus "Tietze-Schenk", 5. Auflage, Abschnitt 18.5.2, Seiten 451 - 453. Werden dagegen durch das erste Signal an den Eingängen 3, 4 die Steuertransistoren 32, 36 abwechselnd gegensinnig in den leitenden und in den sperrenden Zustand geschaltet, folgen die Signale an den Ausgängen 5, 6 den Verläufen der Signale an den Eingängen 3, 4 nach Ablauf einer durch den von der gemeinsamen Stromquelle 33 gelieferten Strom und den Wert der Kapazität 38 bestimmten Verzögerungszeit. Da der Strom in diesem Fall nur in jeweils einem der Stromzweige fließen kann, schwingt die Verzögerungsanordnung 2 nicht selbsttätig.

Wird jedoch bei Erhöhen der Frequenz des ersten Signales dessen halbe Periodendauer kürzer als die durch die Schaltungsparameter bestimmte Verzögerungszeit, wechselt das erste Signal an den Eingängen 3, 4 bereits seinen Wert, wenn der Umladevorgang der Kapazität 38 noch nicht abgeschlossen und damit eine Änderung des zweiten Signales an den Ausgängen 5, 6 noch nicht eingetreten ist. Der Umladevorgang wird dann so lange unterbrochen, bis das erste Signal wiederum den Wert annimmt, den es während des Umladevorganges innehatte. Dann wird dieser beendet, und das zweite Signal an den Ausgängen 5, 6 ändert ebenfalls seinen Wert. Insgesamt folgt jedoch das zweite Signal mit seinem Verlauf nicht mehr dem ersten Signal, und diese Abweichung wird im Detektor 7 in Fig. 1 detektiert. In dieser Betriebsweise reicht der "erlaubte" Frequenzhubbereich von Null bis zu einer oberen Grenze.

Werden dagegen die Steuertransistoren 32, 36 durch das erste Signal an den Eingängen 3, 4 derart angesteuert, daß sie anstelle in den gesperrten Zustand lediglich in einen Zustand mit einem Reststrom überführt werden, wird die Umladung der Kapazität 38 nicht völlig unterbunden. Vielmehr führt eine entsprechend der geringeren Stromstärke des Reststromes verlangsamte selbsttätige Umladung auch bei konstantem Wert des ersten Signales an den Eingängen 3, 4 dazu, daß das zweite Signal an den Ausgängen 5, 6 seinen Wert ändert, wenn eine Zeitspanne abgelaufen ist, die durch den Wert der Kapazität 38 und denjenigen der Restströme bestimmt wird. Daraus resultiert eine untere Grenze für die Frequenz des ersten Signales, unterhalb derer das zweite Signal nicht mehr dem Verlauf des ersten Signals folgt. Der "erlaubte" Frequenzhubbereich, innerhalb dessen das zweite Signal dem verzögerten ersten Signal entspricht, wird jetzt von einer unteren, von Null verschiedenen Grenze zusätzlich zu der bereits beschriebenen oberen Grenze berandet. Innerhalb des Frequenzhubbereiches variiert die Verzögerungszeit von Null an der unteren Grenze bis zu einem Maximalwert an der oberen Grenze.

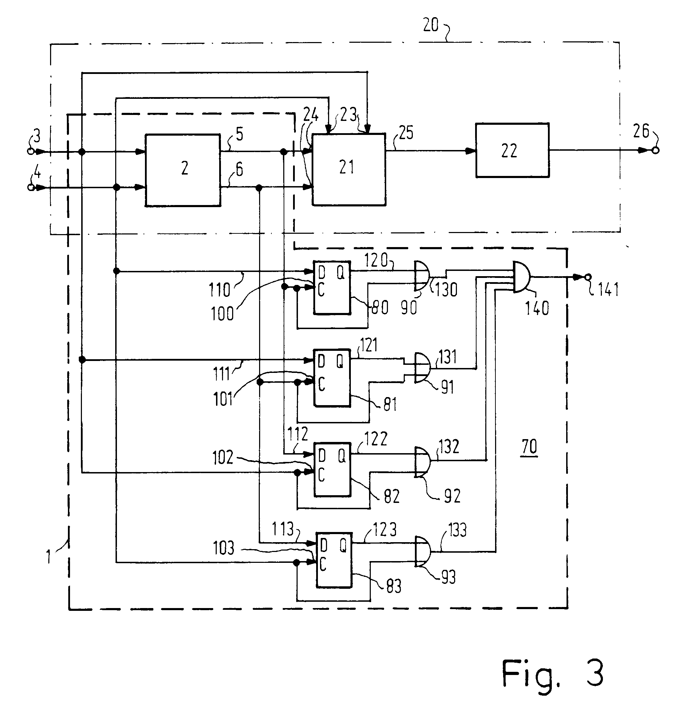

Fig. 3 zeigt eine Abwandlung der Schaltungsanordnung nach Fig. 1 mit einem Detektor 70, der für die Detektion eines Frequenzhubbereiches mit einer unteren, von Null verschiedenen Grenze und einer oberen Grenze eingerichtet ist. Mit Fig. 1 übereinstimmende Bauteile sind wieder mit gleichen Bezugzeichen versehen. Der Detektor 70 umfaßt vier Abtast- und -Halte-Schaltungen 80 bis 83, von denen jede wie beim Detektor 7 aus Fig. 1 mit je einem der Oder-Gatter 90 bis 93 zusammengeschaltet ist. Jede der Abtast-und -Halte-Schaltungen 80 bis 83 ist entsprechend der Abtast- und -Halte-Schaltung 8 gemäß Fig. 1 aufgebaut, weist also einen Steuereingang 100 bis 103, einen Dateneingang 110 bis 113 und einen Ausgang 120 bis 123 auf. Steuer- und Dateneingänge sind in verschiedenen Kombinationen an die Eingänge 3, 4 bzw. die Ausgänge 5, 6 der Verzögerungsanordnung 2 angeschlossen, wobei alle Kombinationsmöglichkeiten mit der Maßgabe verwirklicht sind, daß jeder der Abtast- und -Halte-Schaltungen das erste und das zweite Signal in invertierter bzw.

nichtinvertierter Form zuzuleiten ist. Die Abtast- und -Halte-Schaltungen 80 und 81 detektieren dann ein Unterschreiten der unteren Grenze des Frequenzhubbereiches, die beiden übrigen Abtast- und -Halte-Schaltungen 82, 83 ein Überschreiten der oberen Grenze. Die Signale von den Ausgängen 130 bis 133 der Oder-Gatter 90 bis 93 werden in einem Und-Gatter 140 zusammengefaßt, das an seinem Ausgang 141 das Fehleranzeigesignal liefert. Das Und-Gatter 140 ist im vorliegenden Beispiel in positiver Logik dargestellt; da die Signale an den Ausgängen 130 bis 133 der Oder-Gatter 90 bis 93 jedoch in negativer Logik erscheinen, hat das Und-Gatter 140 für diese die Funktion einer Oder-Verknüpfung. Am Ausgang 141 des Und-Gatters 140 erscheint daher immer dann ein Fehleranzeigesignal, wenn ein solches von wenigstens einem der Oder-Gatter 90 bis 93 erzeugt wird, d. h. wenn eine "unerlaubte" Abweichung zwischen dem ersten und dem zweiten Signal entweder in einer positiven Halbwelle des ersten Signals am Eingang 3 an den Ausgängen 130 bzw. 132 oder in einer negativen Halbwelle des ersten Signals an den Ausgängen 131 bzw. 133 angezeigt wird. Der Detektor 70 reagiert damit sehr rasch auf "unerlaubte" Frequenzänderungen im ersten Signal.

Fig. 4 zeigt eine besonders vorteilhaft zu realisierende Abwandlung der Verzögerungsanordnung 2 gemäß Fig. 2, wobei identische Bauteile wieder mit gleichen Bezugzeichen versehen sind. Die Verzögerungsanordnung 2 nach Fig. 4 umfaßt zusätzlich zwei Konstantstromquellen 321, 361, die parallel zur ersten bzw. zweiten steuerbaren Stromquelle 32, 33 bzw. 36, 33 angeordnet sind. Durch diese Aufteilung ist es in einfacher Weise möglich, die Ströme im ersten bzw. zweiten Stromzweig 30, 31, 32, 321 bzw. 34, 35, 36, 361 zwischen zwei genau bestimmbaren endlichen Werten zu schalten, ohne dafür eine Spannung exakter Größe an die Eingänge 3, 4 führen zu müssen. Die Steuertransistoren 32, 36 können vielmehr zwischen einem möglichst ideal leitenden und einem völlig gesperrten Zustand umgeschaltet werden.

## Patentansprüche

1. Schaltungsanordnung zur Detektion von durch eine Überschreitung eines vorgegebenen, zulässigen Frequenzhubbereiches durch die Frequenz eines ersten Signals verursachten Fehlers mit einem Detektor, der ein Fehleranzeigesignal nur liefert, wenn die Phasenverschiebung zwischen dem ersten Signal und einem ihm in seiner Frequenz folgenden zweiten Signal dem Frequenzhubbereich entsprechende Grenzwerte überschreitet,
gekennzeichnet durch eine Verzögerungsanordnung (2), die das zweite Signal aus dem ersten durch Verzögerung um eine Verzögerungszeit bildet, die an der unteren Grenze des Frequenzhubbereiches verschwindet und innerhalb des Frequenzhubbereiches mit der Frequenz des ersten Signales ansteigt, wobei die Verzögerungsanordnung (2) durch eine Multivibratorschaltung mit zwei Stromzweigen gebildet wird, die je einen Widerstand (30 bzw. 34), den Hauptstrompfad eines Transistors (31 bzw. 35) sowie eine steuerbare Stromquelle (32, 33 bzw. 36, 33) in Reihenschaltung umfassen, wobei die Verbindungspunkte der Transistor-Hauptstrompfade mit den Stromquellen durch eine Kapazität (38) miteinander verbunden sind und der Steueranschluß des Transistors (31, 35) je eines Stromzweiges mit dem Verbindungspunkt des Transistor-Hauptstrompfades und des Widerstandes (30, 34) des anderen Stromzweiges verbunden ist.

2. Schaltungsanordnung nach Anspruch 1,
dadurch gekennzeichnet, daß die Stromquelle (32, 33, 321 bzw. 36, 33, 361) jedes Stromzweiges eine Parallelschaltung einer einen konstanten Dauerstrom liefernde Quelle (321 bzw. 361) und einer schaltbaren Stromquelle (32, 33 bzw. 36, 33) umfaßt.

3. Schaltungsanordnung nach einem oder mehreren der vorhergehenden Ansprüche,
dadurch gekennzeichnet, daß die Verzögerungsanordnung (2) Teil eines Frequenzdemodulators (20) ist, in dem das erste und das zweite Signal durch ein Exklusiv-Oder-Glied (21) verknüpft werden.

4. Abspielgerät für Aufzeichnungsplatten,
gekennzeichnet durch eine Schaltungsanordnung nach einem oder mehreren der vorhergehenden Ansprüche.

## Claims

1. Circuit arrangement for detecting an error caused by the frequency of a first signal which frequency exceeds a predetermined, permissible frequency swing, comprising a detector which supplies an error-indication signal only if the phase shift between the first signal and a second signal, which second signal tracks the frequency of said first signal, exceeds limit values corresponding to the frequency swing, characterized by a delay circuit (2) which forms the second signal from the first signal delayed by a delay time, which delay time disappears at the lower limit of the frequency swing and increases within the frequency swing with the frequency of the first signal, the delay circuit (2) being constituted by a multivibrator circuit having two current branches which comprise each a series arrangement of a resistor (30, 34 respectively), the main current path of a transistor (31, 35 respectively), and a controllable current source (32, 33, and 36, 33 respectively), the junctions of the transistor main current paths and the current sources being connected to each other by a capacitor (38), and the control terminal of the transistor (31, 35) of each branch circuit being connected to the junction between the main current path of the transistor and the resistor (30, 34) in the relevant other current branch.

2. Circuit arrangement as claimed in Claim 1, characterized in that the current source (32, 33, 321 and 36, 33, 361 respectively) of each branch circuit comprises a parallel arrangement of a source (321 and 361 respectively) supplying a constant current and a switchable current source (32, 33 and 36, 33 respectively).

3. Circuit arrangement as claimed in any one or several of the preceding Claims, characterized in that the delay circuit (2) forms part of a frequency demodulator (20), in which the first signal and the second signal are combined by means of an exclusive-OR circuit (21).

4. Playback device for recording discs, characterized by a circuit arrangement as claimed in any one or several of the preceding Claims.

## Revendications

1. Circuit de détection d'erreurs dues au dépassement d'un domaine d'excursion de fréquence admissible prédéterminé par la fréquence d'un premier signal, circuit comportant un détecteur qui ne fournit un signal d'indication d'erreur que si le déphasage entre le premier signal et un second signal, succédant au premier en ce qui concerne sa fréquence, dépasse des valeurs limites correspondant au domaine d'excursion de fréquence, caractérisé par un circuit à retard (2) formant le second signal à partir du premier en lui donnant un retard qui disparaît à la limite inférieure du domaine d'excursion de fréquence et qui augmente avec la fréquence du premier signal dans les limites du domaine d'excursion de fréquence, le circuit à retard (2) étant constitué par un circuit multivibrateur présentant deux branches de circuit comportant chacune le montage en série d'une résistance (30; 34), du trajet de courant principal d'un transistor (31;

35) et d'une source de courant commandable (32, 33; 36, 33), les points communs au trajet de courant principal du transistor d'une part et aux sources de courant d'autre part étant interconnectés par une capacité (38) et la borne de commande du transistor (31, 35) de chacune des branches de circuit étant reliée au point commun au trajet de courant principal du transistor et à la résistance (30, 34) de l'autre branche de circuit.

2. Circuit selon la revendication 1, caractérisé en ce que la source de courant (32, 33, 321; 36, 33, 361) de chaque branche de courant comporte le montage en parallèle d'une source (321; 361) fournissant un courant permanent constant et d'une source de courant commutable (32, 33; 36, 33).

3. Circuit selon une ou plusieurs des revendications précédentes, caractérisé en ce que le circuit à retard (2) fait partie d'un démodulateur de fréquence (20) dans lequel les premier et second signaux sont combinés par une porte OU exclusif (21).

4. Appareil de lecture de disques d'enregistrement, caractérisé par un circuit selon une ou plusieurs des revendications précédentes.

Fig.1

Fig.2

Fig.4

Fig. 3